(19) Europäisches Patentamt
European Patent Office
Office européen des brevets

(11) **EP 4 369 177 A1**

(12) **EUROPEAN PATENT APPLICATION**
published in accordance with Art. 153(4) EPC

(43) Date of publication:
**15.05.2024 Bulletin 2024/20**

(21) Application number: **21952146.5**

(22) Date of filing: **31.07.2021**

(51) International Patent Classification (IPC):
*G06F 3/147* (2006.01)    *G01C 21/34* (2006.01)
*G09G 5/38* (2006.01)    *G08G 1/04* (2006.01)

(52) Cooperative Patent Classification (CPC):
**G01C 21/34; G06F 3/147; G08G 1/04; G09G 5/38**

(86) International application number:
**PCT/CN2021/109949**

(87) International publication number:
**WO 2023/010236 (09.02.2023 Gazette 2023/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Technologies Co., Ltd.
Shenzhen, Guangdong 518129 (CN)**

(72) Inventors:
• **YU, Zhengjie**
  **Shenzhen, Guangdong 518129 (CN)**
• **PENG, Huidong**
  **Shenzhen, Guangdong 518129 (CN)**
• **ZHANG, Yuteng**
  **Shenzhen, Guangdong 518129 (CN)**
• **CAI, Lili**
  **Shenzhen, Guangdong 518129 (CN)**

(74) Representative: **Grünecker Patent- und
Rechtsanwälte
PartG mbB
Leopoldstraße 4
80802 München (DE)**

(54) **DISPLAY METHOD, DEVICE AND SYSTEM**

(57)    This application discloses a display method, an apparatus, and a system, so that an electronic apparatus can display prompt information of a target object at a first moment based on an obtained predicted position of the target object at the first moment and a measurement position before the first moment. This effectively reduces output jitter and improves user experience.

FIG. 7

## Description

### TECHNICAL FIELD

This application relates to the field of automobile technologies, and in particular, to a display method, an apparatus, and a system.

### BACKGROUND

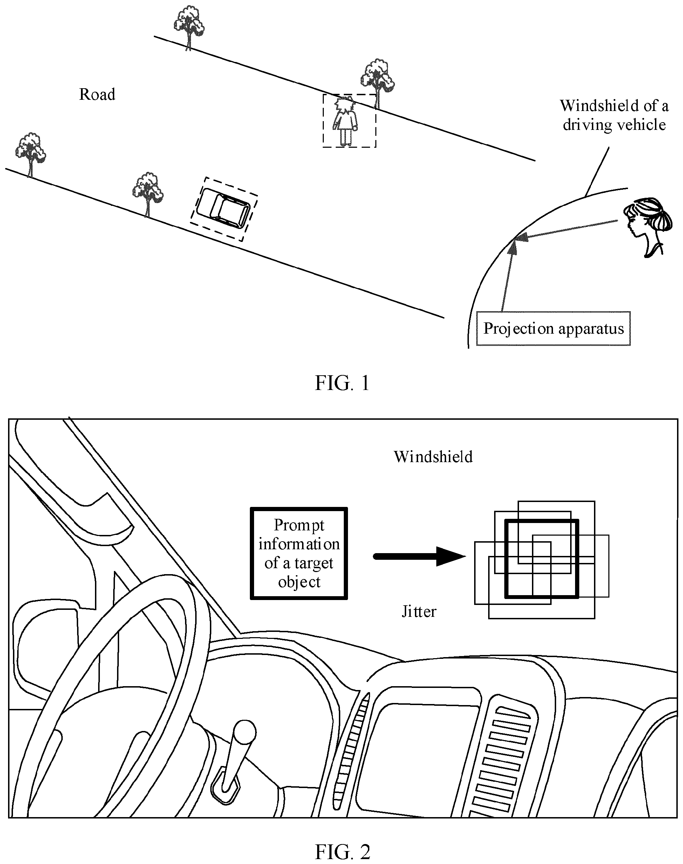

Currently, to facilitate obtaining of road surface information by a driver and implement functions such as augmented reality (augmented reality, AR) navigation and AR warning, as shown in FIG. 1, an AR head-up display (AR head-up display, AR-HUD) is used in a vehicle. That is, information like a pedestrian and a vehicle detected by a camera is transformed to a real-world coordinate system by using coordinates, and is projected onto an electronic apparatus in a front view of the driver, for example, a windshield in a driving vehicle, to fuse projected virtual information and real road condition information, and implement functions such as pedestrian warning and vehicle warning.

However, due to reasons such as a limited computing power resource provided by the driving vehicle, an excessively fast vehicle speed, a detection error of the camera in the driving vehicle, and a bump of a vehicle body in a driving process, as shown in FIG. 2, in a process of using the AR-HUD for display, an obvious jitter phenomenon exists in a detection result of the driving vehicle on a detected pedestrian and vehicle. This causes a person to feel dizzy and affects long-term safe driving of the driver.

In conclusion, currently, an AR-HUD display method is used. This causes large jitter and poor user experience.

### SUMMARY

This application provides a display method, an apparatus, and a system, to reduce image jitter in a display process and improve a display effect.

The display method provided in this application may be performed by an electronic apparatus. The electronic apparatus may be abstracted as a computer system. The electronic apparatus may be a whole device, or may be some components in the whole device, for example, a system chip or an image chip. The system chip may also include a system on chip (system on chip, SOC) or a SoC chip. Specifically, the electronic apparatus may be a terminal apparatus or a vehicle-mounted device like a vehicle-mounted computer or a head unit in a vehicle, or may be a system chip, an image processing chip, or another type of chip that can be disposed in a vehicle or a computer system in a vehicle-mounted device.

According to a first aspect, an embodiment of this application provides a display method, including: obtaining sensing information of a target object; obtaining a predicted position of the target object at a first moment based on the sensing information of the target object; obtaining a measurement position of the target object before the first moment; and enabling, based on the predicted position and the measurement position, a display apparatus of an electronic apparatus to display prompt information of the target object at the first moment.

For example, when the method is performed by the electronic apparatus, the sensing information of the target object may be obtained by a collection apparatus in the electronic apparatus. The collection apparatus may send the sensing information of the target object to a processing apparatus through an interface circuit connected to the processing apparatus in the electronic apparatus. The processing apparatus may obtain the prompt information of the target object at the first moment by processing the obtained sensing information of the target object. The processing apparatus may further send, through an interface circuit connected to the display apparatus in the electronic apparatus, the prompt information of the target object at the first moment to the display apparatus for projection.

The method is used. In a display process, the predicted position of the target object at the first moment is obtained based on the collected sensing information of the target object, and the predicted position is fused with the measurement position obtained before the first moment, so that the electronic apparatus displays the prompt information of the target object at the first moment, to effectively reduce output jitter.

In a possible design, when the measurement position of the target object is not obtained before the first moment, the display apparatus is enabled to display the prompt information of the target object at the first moment and at a display position. The display position is related to the predicted position. Therefore, if the measurement position of the target object is not obtained before the first moment, to better ensure that the display position of the target object at the first moment is output in real time, the predicted position may be directly determined as the display position of the target object at the first moment, to effectively reduce a delay.

For example, when the foregoing method is performed by the electronic apparatus, the processing apparatus in the electronic apparatus may determine whether the measurement position of the target object is obtained before first duration, and when the measurement position of the target object is not obtained before the first duration, the processing apparatus determines the predicted position as the display position.

In a possible design, when the measurement position of the target object is obtained before the first moment, the display apparatus is enabled to display the prompt information of the target object at the first moment and at a display position. The display position is related to the predicted position and the measurement position. Therefore, if the measurement position of the target object is obtained before the first moment, to better reduce jitter of output content, the display position of the target object at the first moment may be determined based on the predicted position and the measurement position.

In a possible design, the processing apparatus in the electronic apparatus may determine an average value of the predicted position and the measurement position as the display position of the target object at the first moment.

In a possible design, when a plurality of measurement positions of the target object are obtained before the first moment, the display apparatus is enabled to display the prompt information of the target object at the first moment and at the display position. The display position is related to the predicted position and an average value of the plurality of measurement positions. Therefore, after the plurality of measurement positions of the target object are obtained before the first moment, a measurement position used to perform fusion with the predicted position needs to be determined, so that fusion is performed on the selected measurement position and the predicted position, to obtain the display position, for example, the average value of the plurality of measurement positions may be determined as the selected measurement position for fusion.

For example, when the foregoing method is performed by the electronic apparatus, the average value of the plurality of measurement positions may be determined by the processing apparatus in the electronic apparatus, and the average value of the plurality of measurement positions perform fusion with the predicted position to obtain the display position of the target object at the first moment.

In a possible design, when a plurality of measurement positions of the target object are obtained before the first moment, the display apparatus is enabled to display the prompt information of the target object at the first moment and at the display position. The display position is related to the predicted position and a last obtained measurement position in the plurality of measurement positions. Therefore, after the plurality of measurement positions of the target object are obtained before the first moment, a measurement position used to perform fusion with the predicted position needs to be determined, so that fusion is performed on the selected measurement position and the predicted position, to obtain the display position, for example, a last measurement position in the plurality of measurement positions may be determined as the selected measurement position for fusion.

For example, when the foregoing method is executed by the electronic apparatus, the processing apparatus in the electronic apparatus may determine the last measurement position in the plurality of measurement positions, and the last measurement position is fused with the predicted position to obtain the display position of the target object at the first moment.

In a possible design, the display position is further related to a preset correction value, and the correction value is used to reduce an error generated when a vehicle wobbles in a driving process. Therefore, after the display position of the target object at the first moment is obtained, to further reduce jitter, fusion calibration may be performed again on the display position of the target object at the first moment before projection, for example, the display position is obtained based on the predicted position, the measurement position, and the correction value, so that the display position that is of the target object on which projection display is performed and that is at the first moment is closer to a real position of the target object. This improves user experience.

For example, when the foregoing method is performed by the electronic apparatus, the display position may be updated based on the correction value by the processing apparatus in the electronic apparatus.

In a possible design, the display position is further related to an average value of display positions corresponding to a plurality of adjacent moments before the first moment. Therefore, after the display position of the target object at the first moment is obtained, to further reduce jitter, fusion calibration may be performed again on the display position of the target object at the first moment before projection, for example, the display position of the target object at the first moment may be obtained based on the display positions corresponding to the plurality of adj acent moments before the first moment, so that the display position that is of the target object on which projection display is performed and that is at the first moment is closer to a real position of the target object. This improves user experience.

For example, when the foregoing method is performed by the electronic apparatus, the processing apparatus in the electronic apparatus may determine the average value of the display positions corresponding to the plurality of adjacent moments before the first moment, and update the display position at the first moment based on the average value.

In a possible design, the display apparatus is enabled to project, based on a correspondence between a world coordinate system of the display position and a vehicle body coordinate system, the prompt information of the target object at the first moment in the world coordinate system onto the vehicle body coordinate system. Therefore, in a display process, to better fit the vehicle body coordinate system, a position of the prompt information of the target object at the first moment in the vehicle body coordinate system may be determined based on the correspondence between the world coordinate system and the vehicle body coordinate system.

For example, when the foregoing method is performed by the electronic apparatus, the position of the prompt information of the target object at the first moment in the vehicle body coordinate system may be determined by the processing apparatus in the electronic apparatus based on the correspondence.

In a possible design, the target object includes one or more of a vehicle, a person, an obstacle, and a traffic sign. The sensing information includes one or more of an external feature of the target object, a position of the target object at the first moment, and a distance between the target object and a driving vehicle at the first moment. Therefore, a status of the target object in front of the driving vehicle and the like may be known based on the collected sensing information of the target object.

For example, in this embodiment of this application, when the target object includes a vehicle, the external feature of the target object includes but is not limited to a vehicle model, a vehicle width, a vehicle length, a vehicle value, a color of the vehicle, and the like. When the target object includes a pedestrian, the external feature of the target object includes but is not limited to a height, a gender, an age group, a clothing color, and the like of the pedestrian.

According to a second aspect, this application further provides an electronic apparatus, including a processing module and a communication module. The communication module is configured to obtain sensing information of a target object through an interface circuit. The processing module may be configured to: obtain a predicted position of the target object at a first moment based on the sensing information of the target object; obtain a measurement position of the target object within preset duration before the first moment; and enable a display apparatus to display prompt information of the target object at the first moment based on the predicted position and the measurement position.

In a possible design, the processing module may be configured to:
when the measurement position of the target object is obtained before the first moment, enable the display apparatus to display the prompt information of the target object at the first moment and at a display position, where the display position is related to the predicted position and the measurement position.

In a possible design, the processing module may be configured to:
when the measurement position of the target object is not obtained before the first moment, enable the display apparatus to display the prompt information of the target object at the first moment and at a display position, where the display position is related to the predicted position.

In a possible design, the processing module may be configured to:
when a plurality of measurement positions of the target object are obtained before the first moment, enable the display apparatus to display the prompt information of the target object at the first moment and at the display position, where the display position is related to the predicted position and an average value of the plurality of measurement positions.

In a possible design, the processing module may be configured to:
when a plurality of measurement positions of the target object are obtained before the first moment, enable the display apparatus to display the prompt information of the target object at the first moment and at the display position, where the display position is related to the predicted position and a last obtained measurement position in the plurality of measurement positions.

In a possible design, the processing module is further configured to:
update the display position based on a correction value; and the correction value is preset, and is used to remove an error generated when a vehicle wobbles in a driving process.

In a possible design, the processing module is further configured to:
update the display position based on an average value of display positions corresponding to a plurality of adjacent moments before the first moment.

In a possible design, the target object includes one or more of a vehicle, a person, an obstacle, and a traffic sign.

According to a third aspect, this application provides a computing device, including a processor. The processor is connected to a memory. The memory stores a computer program or instructions. The processor is configured to execute the computer program or the instructions stored in the memory, so that the computing device performs the method in the first aspect or any one of possible implementations of the first aspect.

According to a fourth aspect, this application provides a computer-readable storage medium. The computer-readable storage medium stores a computer program or instructions. When the computer program or the instructions are executed, a computer is enabled to perform the method in the first aspect or any one of possible implementations of the first aspect.

According to a fifth aspect, this application provides a computer program product. When a computer executes the computer program product, the computer is enabled to perform the method in the first aspect or any one of possible implementations of the first aspect.

According to a sixth aspect, this application provides a chip. The chip is connected to a memory, and is configured to read and execute a computer program or instructions stored in the memory, to implement the method in the first aspect or any one of possible implementations of the first aspect.

According to a seventh aspect, this application provides a vehicle. The vehicle includes the vehicle control apparatus and an execution apparatus in the second aspect or any one of possible implementations of the second aspect, to implement the method in the first aspect or any one of possible implementations of the first aspect.

According to an eighth aspect, this application provides a vehicle. The vehicle includes the chip in the sixth aspect and an execution apparatus, to implement the method in the first aspect or any one of possible implementations of the first aspect.

It should be understood that, according to the technical solution provided in this application, in a display process of a driving vehicle, fusion correction is performed with reference to the predicted position of the target object at the first moment and the measurement position that is obtained by the target object before the first moment, so that the prompt information that is of the target object and that is displayed by the display apparatus at the first moment is closer to an actual situation of the target object. This can effectively reduce jitter of content projected onto a windshield of the driving vehicle. In addition, in the display process, display content may be further updated based on the correction value or the like, to further implement jitter optimization, effectively reduce a giddy feeling generated when a vehicle driver uses AR head-up display to display road condition information, and ensure safe driving of the driver.

## BRIEF DESCRIPTION OF DRAWINGS

FIG. 1 is a schematic diagram of vehicle warning display of an AR-HUD according to this application;
FIG. 2 is a schematic diagram of a display jitter scenario according to this application;
FIG. 3 is a schematic diagram of a scenario of an electronic apparatus according to this application;
FIG. 4 is a schematic diagram of a structure of an electronic apparatus according to this application;
FIG. 5 is a schematic diagram of a structure of another electronic apparatus according to this application;
FIG. 6 is a schematic diagram of a structure of another electronic apparatus according to this application;
FIG. 7 is a schematic flowchart of a first display method according to this application;
FIG. 8 is a schematic flowchart of a second display method according to this application;
FIG. 9 is a schematic diagram of a collection scenario according to this application;
FIG. 10 is a schematic diagram of obtaining a measurement position of a target object according to this application;
FIG. 11 is a first schematic diagram of determining a condition of a display position of a target object according to this application;
FIG. 12 is a schematic diagram of fusing a predicted position and a measurement position into a display position according to this application;
FIG. 13 is a second schematic diagram of determining a condition of a display position of a target object according to this application;
FIG. 14 is a first schematic diagram of determining a measurement position according to this application;
FIG. 15 is a second schematic diagram of determining a measurement position according to this application;

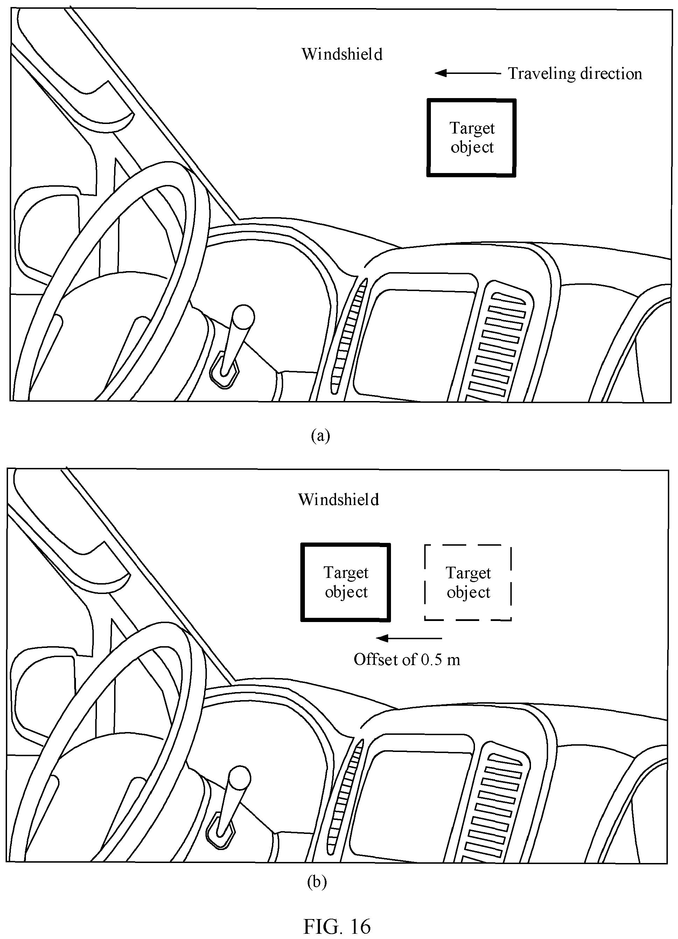

FIG. 16 is a schematic diagram of a scenario of updating a display position according to this application;
FIG. 17 is a schematic diagram of a scenario of updating a display position through sliding window filtering according to this application; and
FIG. 18A and FIG. 18B are a schematic flowchart of a third display method according to this application.

## DESCRIPTION OF EMBODIMENTS

This application provides a display method, an apparatus, and a system, to reduce image jitter in a display process and improve a display effect. The method and the apparatus are based on a same technical idea. Because a problem-resolving principle of the method is similar to a problem-resolving principle of the apparatus, mutual reference may be made to implementation of the apparatus and the method. Details are not described herein again.

In the method provided in embodiments of this application, during display, an electronic device can obtain a predicted position of a target object at a first moment and a measurement position of the target object before the first moment based on obtained sensing information of the target object, and based on the predicted position and the measurement position, a display apparatus is enabled to display prompt information of the target object at the first moment, to effectively reduce jitter of an output image.

The electronic apparatus in embodiments of this application may be configured to support a vehicle in implementing the method provided in embodiments of this application.

Optionally, the electronic apparatus may be integrated with the vehicle. For example, the electronic apparatus may be disposed inside the vehicle. Alternatively, the electronic apparatus and the vehicle may be disposed separately. For example, the electronic apparatus may be implemented in a form like a terminal device. The terminal device herein may be, for example, an AR-HUD or a vehicle-mounted device.

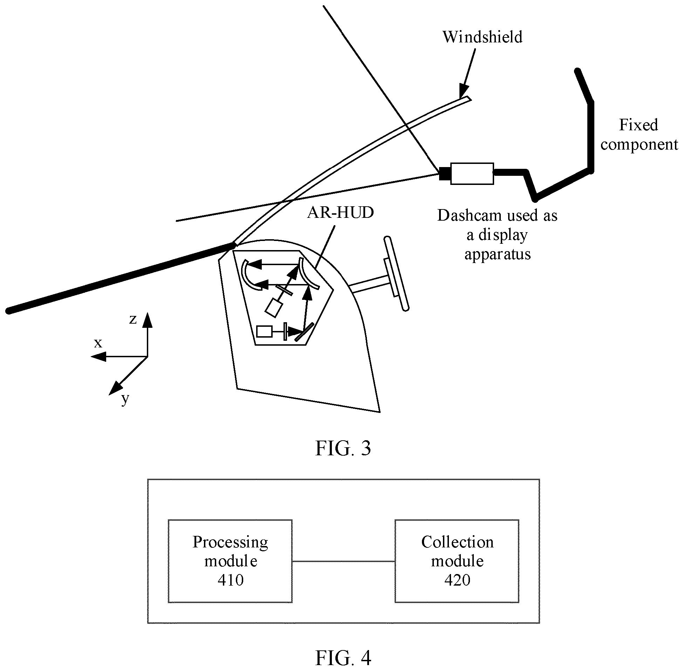

For example, as shown in FIG. 3, that the electronic apparatus is a vehicle-mounted device is used as an example. For example, the vehicle-mounted device is a dashcam with a projection function. The vehicle-mounted device may provide the following functions: obtaining sensing information of a target object by using the dashcam, and based on the sensing information of the target object, determining a predicted position of the target object at a first moment and a measurement position before the first moment; and displaying prompt information of the target object at the first moment based on the predicted position and the measurement position.

The vehicle in embodiments of this application may have an automatic driving function, and in particular, has a human machine interaction (human machine interaction, HMI) function, and the like.

In addition, it should be understood that, according to an actual use requirement, the vehicle may also be replaced with another carrier or means of transportation like a train, an aircraft, a mobile platform, or the like. This is not limited in this application.

For example, FIG. 4 is a schematic diagram of a structure of a possible electronic apparatus. The structure may include a processing module 410 and a collection module 420. For example, the structure shown in FIG. 4 may be a vehicle-mounted device or a functional component having the electronic apparatus shown in this application.

When the structure is the vehicle-mounted device or another electronic device, the collection module 420 may include an apparatus that is configured to support a target object collection function, for example, a camera apparatus or a sensing apparatus. The processing module 410 may be a processor, for example, a central processing unit (central processing unit, CPU). The collection module 420 may communicate with the processing module 410 through Bluetooth connection, network connection, or an interface circuit. The processing module 410 may display road condition information on a display 410 in one of a projection manner, a wired connection manner, or a wireless connection manner. When the structure is the functional component having the electronic apparatus shown in this application, the collection module 420 may include an apparatus that is configured to support a target object collection function, for example, a camera apparatus or a sensing apparatus. The processing module 410 may be a processor. The collection module 420 may communicate with the processing module 410 through an interface circuit. The processing module 410 may display prompt information of a target object on a display 410 in one of a projection manner, a wired connection manner, or a wireless connection manner. When the structure is a chip or a chip system, the collection module 420 may be one or more of a camera apparatus or a sensing apparatus that is/are controlled by the chip, and the processing module 410 may be a processor of the chip, and may include one or more central processing units. It should be understood that the processing module 410 in this embodiment of this application may be implemented by a processor or a circuit component related to a processor, and the collection module 420 may be implemented by a camera apparatus, a sensing apparatus, or a related collection apparatus.

For example, the processing module 410 may be configured to perform all operations performed by the electronic apparatus in any embodiment of this application except a collection operation and a projection operation, for example, the processing module 410 determines a predicted position of the target object at a first moment based on sensing information of the target object; and displays prompt information and the like of the target object at the first moment based on the predicted position and a measurement position of the target object. The collection module 420 may be configured to perform a collection operation on the target object in any embodiment of this application, for example, the collection module 420 obtains sensing information of the target object by using one or more of a camera apparatus and a sensing apparatus.

The sensing information of the target object obtained by the processing apparatus 410 may be generated from one or more types of sensing data that is in point cloud information, sound, and a picture of the target object and that is collected by an external sensor or camera. Alternatively, the sensing information of the target object obtained by the processing apparatus 410 may be generated from one or more types of sensing data that is in point cloud information, sound, and a picture of the target object and that is collected by a sensor or a camera of the processing apparatus 410.

The camera apparatus in this embodiment of this application may be a monocular camera lens, a binocular camera lens, or the like. A photographing area of the camera apparatus may be an external environment of a vehicle. The sensing apparatus is configured to obtain the sensing data of the target object, to assist the processing apparatus in the vehicle in analyzing and determining the sensing information of the target object. For example, the sensing apparatus in this embodiment of this application may include a lidar, a millimeter-wave radar, an ultrasonic radar, and the like that are configured to obtain environment information.

In addition, the processing module 410 may be a functional module. The functional module can not only complete an analysis operation of collected information, but also complete an operation of displaying road condition information on a display. When performing a processing operation, the processing module 410 may be considered as an analysis module. However, when performing a display operation, the processing module 410 may be considered as a display module. For example, the processing module 410 in this embodiment of this application may be replaced by an AR-HUD. That is, the AR-HUD in this embodiment of this application has a function of the processing module 410. Alternatively, the processing module 410 may include two functional modules. The processing module 410 may be considered as a general name of the two functional modules. The two functional modules are an analysis module and a display module respectively. The analysis module is configured to: analyze a road condition based on the obtained sensing information of the target object, and determine the prompt information of the target object at the first moment based on the predicted position of the target object at the first moment and the measurement position before the first moment. The display module is configured to display, on a display, the prompt information of the target object determined by the analysis module.

In addition, in this embodiment of this application, the electronic apparatus may further include a storage module, configured to store one or more programs and data information. The one or more programs include instructions. The electronic apparatus may further include a display, and the display may be a windshield in a vehicle or a display of another vehicle-mounted device.

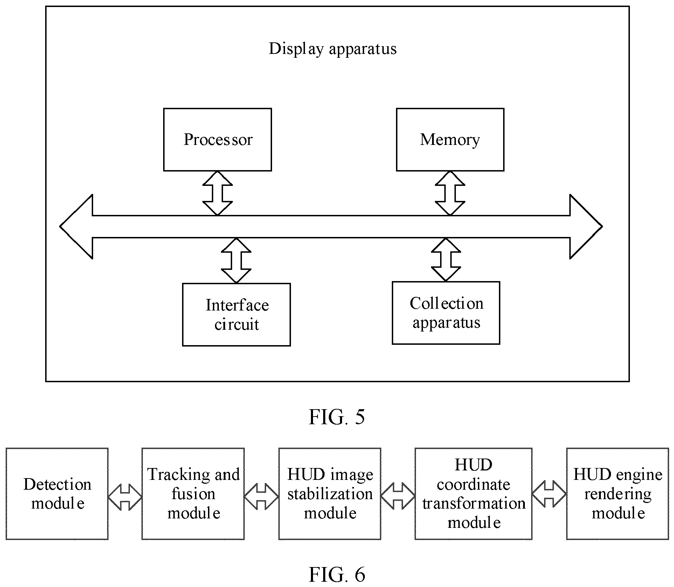

For ease of understanding and illustration, FIG. 5 shows a schematic diagram of a structure of another electronic apparatus for performing actions performed by the electronic apparatus according to an embodiment of this application. As shown in FIG. 5, the electronic apparatus may include a processor, a memory, and an interface circuit. In addition, the electronic apparatus may further include at least one component of a collection apparatus, a processing apparatus, a display apparatus, or a display. The processor is mainly configured to implement a processing operation provided in this embodiment of this application, for example, analyzing and processing obtained sensing information of a target object, executing a software program, and processing data of the software program. The memory is mainly configured to store the software program and data. The collection apparatus may be configured to collect sensing information of the target object, and may include a camera lens, a millimeter-wave radar, an ultrasonic sensor, or the like. The interface circuit may be configured to support communication of the electronic apparatus. For example, after collecting the sensing information of the target object at a first moment, the collection apparatus may send the collected sensing information to the processor through the interface circuit. The interface circuit may include a transceiver or an input/output interface.

It should be understood that, for ease of description, FIG. 5 shows only one memory and one processor. In an actual electronic apparatus product, there may be one or more processors and one or more memories. The memory may also be referred to as a storage medium, a storage device, or the like. The memory may be disposed independent of the processor, or may be integrated with the processor. This is not limited in this embodiment of this application.

FIG. 6 is another electronic apparatus according to an embodiment of this application. It can be learned that the electronic apparatus may include a detection module, a tracking and fusion module, an HUD image stabilization module, an HUD coordinate transformation module, an HUD engine rendering module, and the like.

The detection module is configured to detect sensing information of a target object by using a detection algorithm, for example, detect pedestrian and vehicle information, to obtain positions of the pedestrian and the vehicle and frame information. A specific form is related to a detection apparatus. For example, photos of the pedestrian and the vehicle are captured by a camera lens, and information about a pedestrian and a vehicle is obtained based on photo content. For another example, distances between a vehicle driven by a driver and each of a pedestrian and a vehicle and positions of the pedestrian and the vehicle are obtained by the sensor. In addition, the detection module may be further configured to detect a measurement position or the like of the target object before a first moment.

The tracking and fusion module may be configured to: establish a 3D prediction model for the detected sensing information of the target object at the first moment, and perform predictive tracking on a position of the target object at the first moment by using the model. When the detection is completed, a predicted output value obtained by using the model and a detection value of the target object before the first moment are fused and updated as an output, and when the detection is not completed, a predicted value of a tracking algorithm is output by using an MQ mechanism.

The HUD image stabilization module is configured to smooth a position output of the tracking and fusion module through sliding window filtering, to reduce a jitter degree of the tracking and fusion module, and improve stability of a 3D detection box.

The HUD coordinate transformation module is configured to transfer position information from a camera coordinate system to a vehicle body coordinate system by using a camera posture calibration algorithm of a real vehicle in a large scenario in a HUD scenario.

The HUD engine rendering module is configured to: input final output position information into an HUD rendering engine, render corresponding warning information of a pedestrian/vehicle warning, and project the warning information onto a windshield by using an optical transceiver, to present the warning information to a driver, so that the driver can obtain the warning information of a pedestrian and a vehicle in real time. This implements a real-time warning for the pedestrian and the vehicle.

The system architecture and service scenarios described in embodiments of this application are intended to describe the technical solutions in embodiments of this application more clearly, and do not constitute a limitation on the technical solutions provided in embodiments of this application. Further, a person of ordinary skill in the art may learn that, with evolution of vehicle architectures and emergence of new service scenarios, the technical solutions provided in embodiments of this application are also applicable to similar technical problems. It should be understood that FIG. 4 to FIG. 6 are merely simplified schematic diagrams of examples for ease of understanding. The system architecture may further include another device or may further include another unit module.

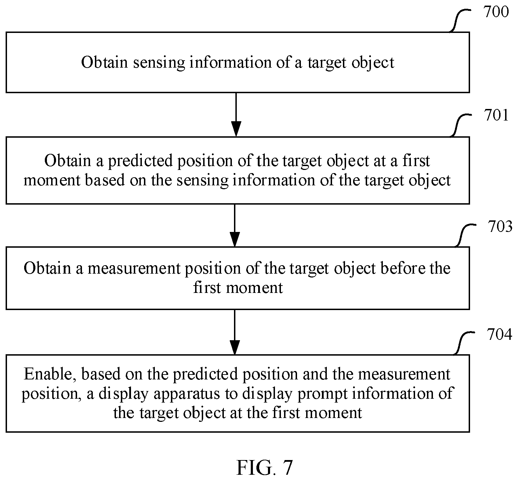

The following describes the method provided in embodiments of this application with reference to FIG. 7. The method may be performed by an electronic apparatus. The electronic apparatus may include a processing apparatus and a display apparatus. The processing device may be a head unit, a computer, or a processing apparatus used in an HUD. The electronic apparatus may include any one or more structures shown in FIG. 4 to FIG. 6. When the display method is implemented, the processing module 410 shown in FIG. 4, the processor shown in FIG. 5, or the tracking and fusion module, the HUD image stabilization module, the HUD coordinate transformation module, and the HUD engine rendering module shown in FIG. 6 may implement processing actions in the method provided in embodiments of this application. Alternatively, the collection module 420 shown in FIG. 4, the collection apparatus shown in FIG. 5, or the detection module shown in FIG. 6 may be configured to collect sensing information of a target object. Interaction includes but is not limited to: obtaining the sensing information of the target object.

S700: An electronic apparatus obtains sensing information of a target object.

S701: The electronic apparatus obtains a predicted position of the target object at a first moment based on the sensing information of the target object.

S702: The electronic apparatus obtains a measurement position of the target object before the first moment.

S703: The electronic apparatus enables, based on the predicted position and the measurement position, a display apparatus to display prompt information of the target object at the first moment.

It should be noted that, in this embodiment of this application, the electronic apparatus may display the prompt information based on the measurement position and the predicted position of the target object, and the like (or only based on the predicted position). The electronic apparatus may display the prompt information at the position, or may display the prompt information at a nearby position or a related position.

For example, the target object is framed. Alternatively, some prompt messages are displayed, for example, prompting that there are pedestrians nearby.

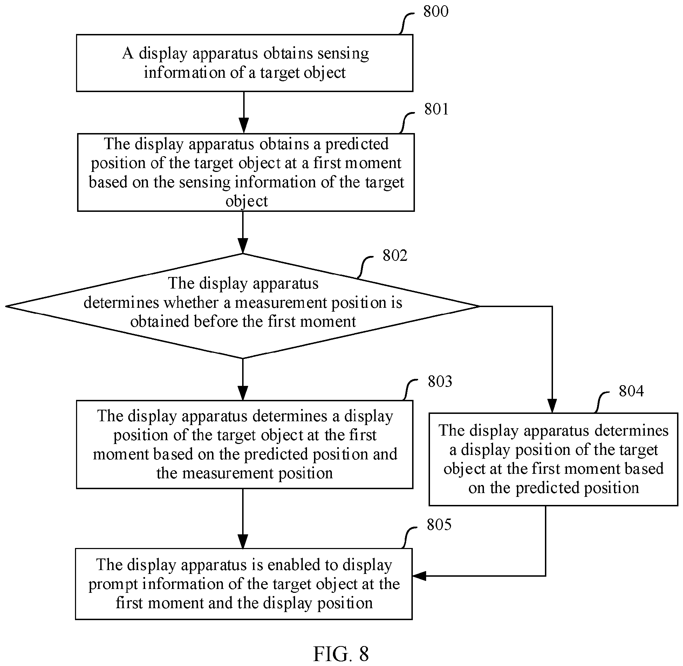

To better describe the display method provided in this application, as shown in FIG. 8, based on the content shown in FIG. 7, the following steps are further described in detail.

S800: An electronic apparatus obtains sensing information of a target object.

In an optional manner of this application, the electronic apparatus may obtain the sensing information of the target object through an interface circuit. Alternatively, the electronic apparatus may obtain the sensing information of the target object in a wireless communication manner, for example, a Bluetooth connection manner. This is not limited herein.

In addition, the sensing information that is of the target object and that is obtained by the electronic apparatus may be sensing information at a moment. Alternatively, the sensing information that is of the target object and that is obtained by the electronic apparatus may be sensing information within duration. After obtaining the sensing information within the duration, the electronic apparatus may filter the obtained sensing information within the duration, to filter out useful sensing information.

The target object in embodiments of this application includes one or more of a vehicle, a pedestrian, an obstacle, and a traffic sign. The traffic sign may further include one or more of a road sign, a traffic light, and a traffic index line.

It should be understood that the target object in embodiments of this application is not limited to the foregoing content, and any object applicable to this application may be used as the target object in this application.

Further, the sensing information of the target object may be one or more of an external feature of the target object, a current position of the target object, or a distance from a driving vehicle. For example, if the target object includes a vehicle, the sensing information of the target object may include one or more of an external feature of the vehicle, a current position of the vehicle, and a distance from a driving vehicle. The external feature of the vehicle may include a model of the vehicle, a color of the vehicle, a length of the vehicle, a width of the vehicle, and the like.

If the target object includes a pedestrian, the sensing information of the target object may include one or more of an external feature of the pedestrian, a current position of the pedestrian, and a distance from a driving vehicle. The external feature of the pedestrian may include an identity of the pedestrian, and the like. For example, the identity of the pedestrian may be an adult, an elderly person, or the like. Thus, the electronic device determines whether the pedestrian has an ability to reflect quickly, whether an early warning needs to be strengthened, and the like based on the identity of the pedestrian.

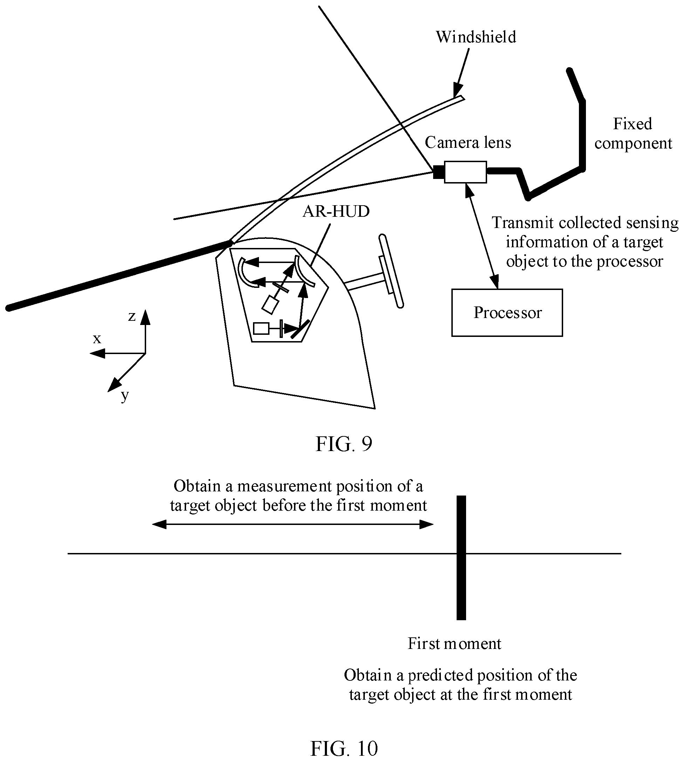

To better understand the step S800, an example in which sensing information of a target object is collected by using a camera lens is used for description herein. For example, as shown in FIG. 9, a camera lens may capture a plurality of consecutive images, determine sensing information of a target object by identifying feature pixels in the images, and then send the sensing information to a processor in an electronic apparatus through an interface circuit, so that the electronic apparatus obtains the sensing information of the target object. For another example, a camera lens may capture a plurality of consecutive images, and then directly send the plurality of collected images to a processor in an electronic apparatus through an interface circuit. The processor identifies feature pixels in the images, and determines sensing information of a target object, so that the electronic apparatus obtains the sensing information of the target object.

S801: The electronic apparatus obtains a predicted position of the target object at a first moment based on the sensing information of the target object.

In an optional manner of this embodiment of this application, the electronic apparatus may input the obtained sensing information of the target object into a prediction model for determining the predicted position, to obtain the predicted position of the target object at the first moment.

In this embodiment of this application, the prediction model may be established based on previously obtained sensing information of a threshold quantity of target objects. A prediction model function herein is to predict a position of the target object within a future time period based on current sensing information of the target object, for example, information like an acceleration, a direction, a distance, and a position of the target object.

In this embodiment of this application, the electronic apparatus may further perform feedback based on an error between a predicted position of the target object within a time period and a corresponding actual position, update and adjust an established prediction model, and the like.

It should be noted that manners of establishing the prediction model, a prediction method, and the like are not limited in this application.

In addition, in this application, the electronic apparatus may further perform position prediction or the like based on a large database corresponding to the target object.

It should be understood that a manner of obtaining the predicted position of the target object at the first moment is not limited in this embodiment of this application, and any manner that can be applied to this application is applicable to this application. S802: The electronic apparatus attempts to obtain a measurement position before the first moment, and if the measurement position is obtained, S803 is performed; or if the measurement position is not obtained, S804 is performed.

When the electronic apparatus obtains the measurement position, there may be a plurality of implementations, which are not specifically limited to the following.

An implementation 1: The measurement position is obtained by the electronic apparatus before the first moment.

In other words, the electronic apparatus only needs to ensure that the measurement position is obtained before the first moment.

An implementation 2: The measurement position is obtained by the electronic apparatus within preset duration before the first moment.

In other words, the electronic apparatus needs to ensure that the measurement position is obtained before the first moment and within the preset duration before the first moment.

For example, as shown in FIG. 10, it is assumed that the preset duration is 1 ms. The electronic apparatus obtains the measurement position of the target object within 1 ms before the first moment.

In an optional manner of this embodiment of this application, in this embodiment of this application, a camera lens may continuously capture a plurality of images within the preset duration, and determine sensing information of the target object within the preset duration by identifying feature pixels in the images. Then, the sensing information is sent to the electronic apparatus through an interface circuit, so that the electronic apparatus determines a measurement position of the target object based on the sensing information within the preset duration.

In another optional manner of this embodiment of this application, in this embodiment of this application, a camera lens may continuously capture a plurality of images within the preset duration, and then directly send the plurality of collected images to the electronic apparatus through an interface circuit, so that the electronic apparatus identifies feature pixels in the images, determines sensing information of the target object, and further determines a measurement position of the target object.

It should be noted that in this embodiment of this application, there may be one measurement position, a plurality of measurement positions, or no measurement position that is of the target object and that is obtained by the electronic apparatus within the preset duration before the first moment.

S803: The electronic apparatus determines a display position of the target object at the first moment based on the predicted position and the measurement position.

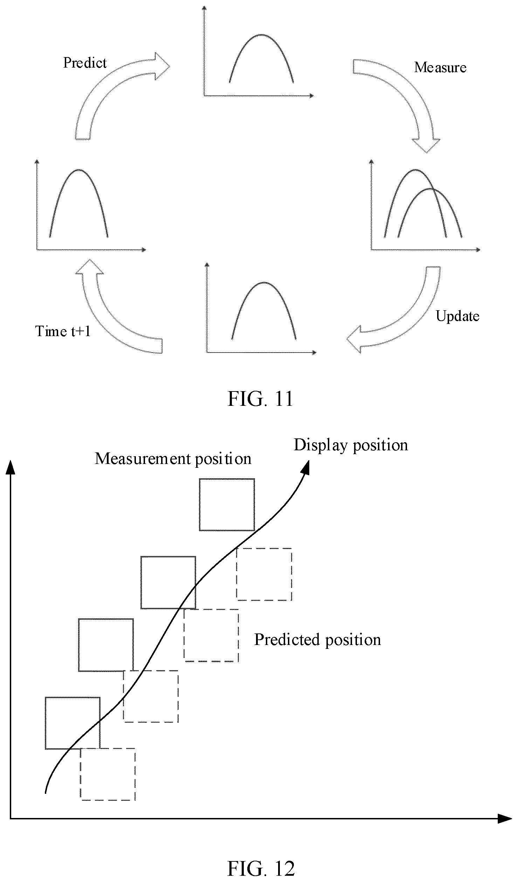

In a case, as shown in FIG. 11, if the electronic apparatus determines that the measurement position of the target object is obtained within the preset duration, the electronic apparatus fuses the measurement position with the predicted position, to obtain the display position of the target object at the first moment.

For example, in this embodiment of this application, the electronic apparatus may determine an average value of the predicted position and the measurement position as the display position.

It should be understood that, in this embodiment of this application, as shown in FIG. 12, the display position of the target object at the first moment is obtained through fusion and correction based on the predicted position of the target object at the first moment and the measurement position, so that the obtained display position is closer to a real track of the target object. This effectively reduces jitter, and improves user experience.

Further, in S803, if the electronic apparatus obtains a plurality of measurement positions of the target object within the preset duration, the electronic apparatus may determine, in a plurality of manners, a measurement position used to be fused with the predicted position. The manners are not specifically limited to the following several manners.

A determining manner 1: The electronic apparatus determines an average value of the plurality of measurement positions as a measurement position used to be fused with the predicted position.

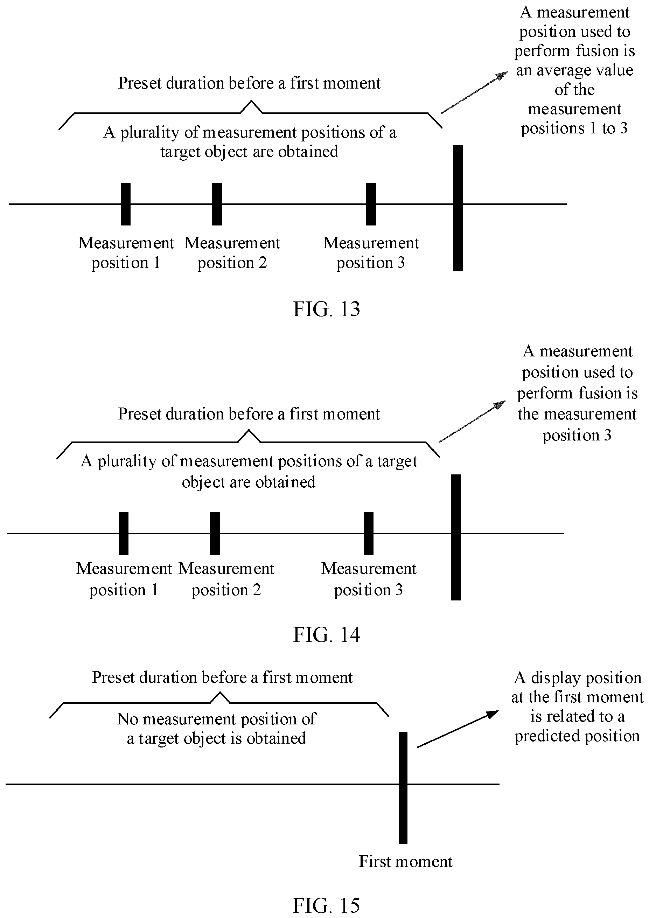

For example, as shown in FIG. 13, it is assumed that three measurement positions, for example, measurement positions 1 to 3, are obtained within preset duration before a first moment. The electronic apparatus may determine an average value of the three measurement positions, and then determine the average value of the three measurement positions as a measurement position used to be fused with the predicted position.

A determining manner 2: The electronic apparatus determines a last measurement position in the obtained plurality of measurement positions as a measurement position used to be fused with the predicted position.

For example, as shown in FIG. 14, it is assumed that three measurement positions, for example, measurement positions 1 to 3, are obtained within preset duration before a first moment. It should be understood that closer to the measurement position at the first moment indicates stronger timeliness. Therefore, the electronic apparatus may determine the measurement position 3 in the three measurement positions as the measurement position used to be fused with the predicted position.

S804: The electronic apparatus determines the display position of the target object at the first moment based on the predicted position.

As shown in FIG. 15, if the electronic apparatus determines that no measurement position of the target object is obtained within the preset duration, the electronic apparatus uses the predicted position as the display position of the target object at the first moment.

It should be understood that, when detection of the target object by the electronic apparatus is blocked and is not completed within preset time, the predicted position of the target object at the first moment is directly used as an output. This can greatly improve a system display output speed and reduce a delay.

S805: The electronic apparatus enables a display apparatus to display prompt information of the target object at the first moment and at the display position.

In a case, when the electronic apparatus has a projection function and/or a display function, the electronic apparatus may deliver the prompt information of the target object to a windshield of a driving vehicle at the first moment and at the display position.

In another case, when the electronic apparatus does not have a projection and/or display function, the electronic apparatus may send a control instruction to a connected display, for example, a vehicle-mounted display or an AR-HUD, through an interface circuit, so that the display receiving the control instruction displays the prompt information of the target object at the first moment. The control instruction may instruct the display to display corresponding content. Alternatively, the electronic apparatus may send a control instruction to a connected display, for example, a vehicle-mounted display or an AR-HUD, in a wireless connection manner, for example, a Bluetooth connection manner, so that the display receiving the control instruction displays the prompt information of the target object at the first moment. The control instruction may instruct the display to display corresponding content.

In addition, in a second case in S805 of this embodiment of this application, a manner in which the electronic apparatus enables the HUD to display the prompt information of the target object at the first moment is not specifically limited to the following several.

A display manner 1: The electronic apparatus performs projection coordinate system conversion, and sends converted display position of the target object to the HUD for projection.

When the electronic apparatus performs HUD coordinate system conversion on the obtained display position of the target object at the first moment, the electronic apparatus may use the following manner to implement the HUD coordinate system conversion.

The electronic apparatus maps a display position in a world coordinate system to a vehicle body coordinate system based on a correspondence between the world coordinate system in which the display position is located and the vehicle body coordinate system.

In an optional manner in this embodiment of this application, the electronic apparatus may determine and establish, in the following manner, a correspondence between the world coordinate system in which the display position is located and the vehicle body coordinate system, to perform coordinate system conversion on the display position based on the correspondence.

For example, an internal parameter of the electronic apparatus is first determined.

The internal parameter of the electronic apparatus includes but is not limited to three postures of the electronic apparatus: a roll angle (roll), a yaw angle (yaw), and a pitch angle (pitch).

For example, a checkerboard is placed in front of an electronic apparatus a plurality of times to calibrate an internal parameter of the electronic apparatus. Then, based on the internal parameter of the electronic apparatus, the checkerboard is placed vertically in front of a vehicle body of an HUD, external parameters such as a rotation matrix R and an offset vector T of the electronic apparatus are calibrated, and an offset of the checkerboard to an HUD vehicle body coordinate system is measured.

The offset of the HUD vehicle body coordinate system may be determined according to the following formula 1.

$$\Delta d = (\Delta x, \Delta y, \Delta z) \quad \text{formula 1,}$$

where

$\Delta d$ indicates the offset of the checkerboard to the HUD vehicle body coordinate system in three directions: x, y, and z; $\Delta x$ indicates an offset in the x direction; $\Delta y$ indicates an offset in the y direction; and $\Delta z$ indicates an offset in the z direction.

Further, after the internal parameter of the electronic apparatus and the offset of the electronic apparatus to the HUD vehicle body coordinate system are determined, a corresponding HUD vehicle body coordinate system may be obtained according to the following formula 2.

$$\begin{bmatrix} x_{car} \\ y_{car} \\ z_{car} \end{bmatrix} = \begin{bmatrix} x_w \\ y_w \\ z_w \end{bmatrix} + \Delta d \quad \text{formula 2,}$$

where

$x_{car}$ indicates a coordinate of a vehicle body coordinate system in an x-direction, $y_{car}$ indicates a coordinate of the vehicle body coordinate system in a y-direction, and $z_{car}$ indicates a coordinate of the vehicle body coordinate system in a z-direction; and $x_w$ indicates a coordinate of a world coordinate system in the x-direction, $y_w$ indicates a coordinate of the world coordinate system in the y-direction, and $z_w$ indicates a coordinate of the world coordinate system in the z-direction.

Further, the electronic apparatus sends the converted display position of the target object at the first moment to the HUD, and the HUD projects prompt information of the target object onto a windshield of a driving vehicle based on the display position.

A projection manner 2: The electronic apparatus sends the display position of the target object at the first moment to the HUD, and the HUD performs projection coordinate system conversion.

When the HUD in the driving vehicle performs HUD coordinate system conversion on the obtained display position of the target object at the first moment, the HUD may use the following manner to implement the HUD coordinate system conversion.

The HUD maps the display position in the world coordinate system to the vehicle body coordinate system based on a correspondence.

In this embodiment of this application, the HUD determines and establishes the correspondence between the world coordinate system in which the display position is located and the vehicle coordinate system. For details, refer to the content description of the foregoing projection manner 1. For brevity, details are not described herein again.

Further, the HUD may further render corresponding prompt information for the target object based on the display position of the target object at the first moment, and project the corresponding prompt information onto a windshield by using an optical transceiver, to present the prompt information in front of a driver, so that the driver can obtain warning information of a pedestrian and a vehicle in real time. This implements a real-time warning for the pedestrian and the vehicle.

Further, in this embodiment of this application, the display position may be determined in the following manner.

A manner 1: The display position is related to a preset correction value.

The correction value in this embodiment of this application may be preset, and is used to eliminate an error generated when a vehicle wobbles in a driving process.

In an optional manner in this embodiment of this application, the electronic apparatus may perform correction by using different correction values based on different driving scenarios.

The electronic apparatus may determine a driving scenario based on different road conditions. For example, a driving scenario of a flat asphalt road may be an urban area, and a driving scenario of a narrow and steep road section may be a mountain road.

Further, in this embodiment of this application, a wobbling status of a vehicle in different driving scenarios may be obtained through big data analysis, and correction values corresponding to different scenarios may be determined based on the wobbling status of the vehicle.

It may be understood that when traveling on a flat asphalt road, the vehicle is stable and a correction value is small; and when traveling on a mountain road, the vehicle wobbles strongly and a correction value is large.

For example, it is assumed that a current driving scenario is an urban area. Based on a correspondence between the driving scenario and a correction value, it may be learned that the correction value in the scenario is an offset of 0.5 meters in a traveling direction of a target object.

For example, when the display position is not further obtained based on the correction value, the display position of the target object is shown in (a) in FIG. 15. When a display apparatus further obtains the display position based on the correction value before projection, a display position of the target object at a first moment after the projection is shown in (b) in FIG. 15. The position in (b) in FIG. 15 is offset by 0.5 meters from the display position in (a) in FIG. 15.

A manner 2: The display position is related to an average value of display positions corresponding to a plurality of adjacent moments before the first moment.

For example, the electronic apparatus in this embodiment of this application may update the display position of the target object at a first position through sliding window filtering.

The electronic apparatus determines mean filtering based on display positions of at least two adjacent frames. Then, the electronic apparatus performs sliding window filtering based on the mean filtering and a preset step, to update the display position of the target object at the first position.

In this embodiment of this application, the mean filtering may be determined according to the following formula 3:

$$\bar{x} = \frac{x_{k+1} + x_{k+2} + \cdots + x_{k+n}}{n} \, (k = 0,1,2,3..) \quad \text{formula 3,}$$

where

k indicates position information of the target object in the $k^{th}$ frame, n indicates a quantity of frames selected for mean filtering, and $\bar{x}$ indicates the mean filtering.

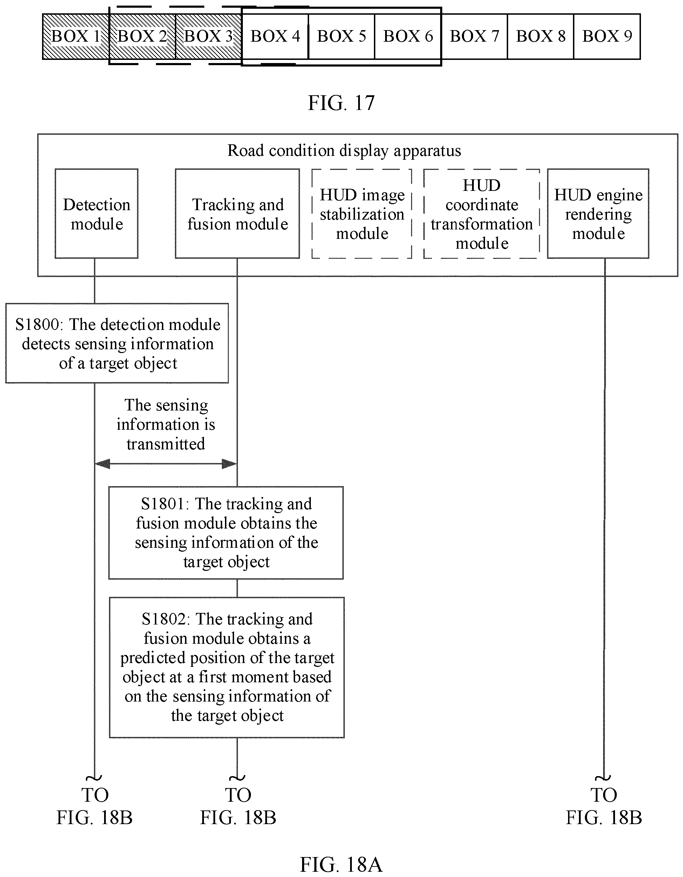

It is assumed that, as shown in FIG. 17, three adjacent frames are selected for mean filtering, and a preset step is 1. The electronic apparatus performs sliding window filtering, to obtain a smooth and stable display position output. Each Box represents a display position corresponding to each frame.

Further, in this embodiment of this application, to effectively reduce system power consumption, before displaying, the electronic apparatus may determine that a driving vehicle is in a running state.

In this embodiment of this application, whether the driving vehicle is in the running state may be determined based on one or more of the following conditions.

A condition 1: whether an engine of the driving vehicle is running.

A condition 2: whether a moving distance of the driving vehicle within specific time is greater than a threshold distance.

A condition 3: whether the driving vehicle is driven in a gear P (Parking) or a gear D (Drive).

In addition, in an optional manner in this embodiment of this application, to effectively improve a speed of outputting the display position of the target object by the electronic apparatus, an MQ parallel mechanism may be used in a road condition display process.

Specifically, modules of an entire system may be interdependent and serial, and the modules of the entire system may be decoupled by using a message queue (message queue, MQ) mechanism, to reduce coupling between the modules, so that the modules of the entire system are parallel. Alternatively, another manner may be used. This is not limited in this application.

For example, in a process of detecting a target object on a road, after an update position of the target object is not obtained within threshold duration (that is, after it is determined that the detection is blocked), a detection system directly uses, as an output, a predicted value that is of a next-moment position of the target object and that is obtained by using a prediction model. A tracking and output rate is greatly improved.

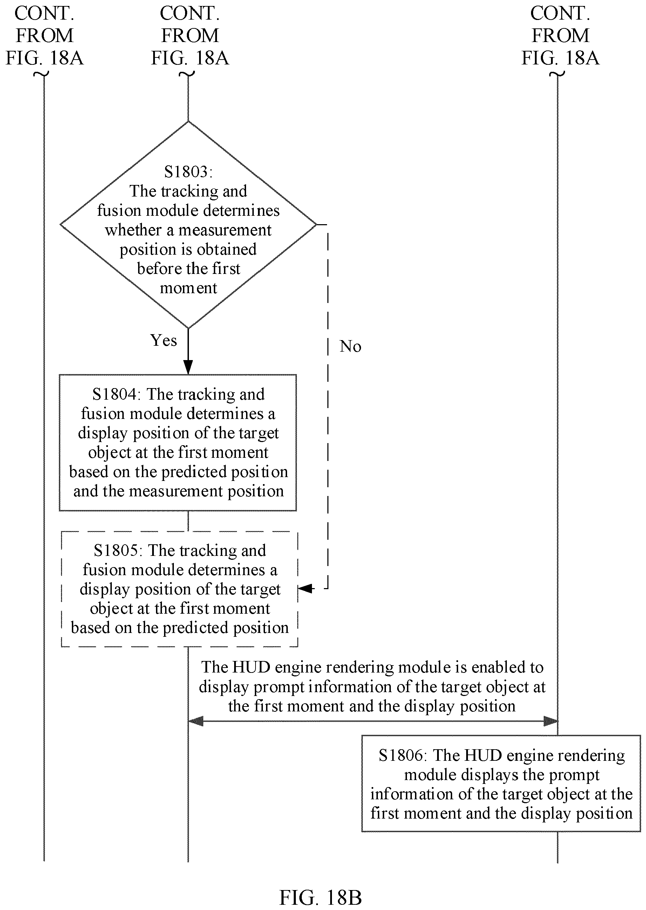

As shown in FIG. 18A and FIG. 18B, when the electronic apparatus includes the detection module, the tracking and fusion module, the HUD image stabilization module, the HUD coordinate transformation module, the HUD engine rendering module, and the like shown in FIG. 6, the method provided in this embodiment of this application may include the following steps.

S1800: The detection module detects sensing information of a target object.

S1801: The tracking and fusion module obtains the sensing information of the target object.

In an optional manner in this embodiment of this application, the tracking and fusion module may obtain, through an interface circuit, the sensing information that is of the target object and that is detected by the detection module. Alternatively, the tracking and fusion module may obtain, in a wireless connection manner, for example, a Bluetooth connection manner, the sensing information that is of the target object and that is detected by a connected detection module.

S 1802: The tracking and fusion module obtains a predicted position of the target object at a first moment based on the sensing information of the target object.

In an optional manner in this embodiment of this application, the tracking and fusion module may input the obtained sensing information of the target object into a prediction model for determining the predicted position, to obtain the predicted position of the target object at the first moment.

In this embodiment of this application, the tracking and fusion module may establish the prediction model based on previously obtained sensing information of a threshold quantity of target objects.

It should be understood that in this embodiment of this application, the tracking and fusion module may update and adjust the established prediction model based on the obtained sensing information of the target object.

S1803: The tracking and fusion module determines whether a measurement position is obtained before the first moment, and if the measurement position is obtained before the first moment, S1804 is performed; or if no measurement position is obtained before the first moment, S1805 is performed.

In an optional manner, the measurement position of the target object before the first moment may be notified to the tracking and fusion module by the detection module after the detection module detects the measurement position. In another optional manner, the measurement position of the target object before the first moment may be determined by the tracking and fusion module based on sensing information that is before the first moment and that is of the target object notified by the detection module.

Specific content of S1803 is similar to content of S802. For brief description, refer to the content of S802 for details.

S1804: The tracking and fusion module determines a display position of the target object at the first moment based on the predicted position and the measurement position.

The tracking and fusion module may determine an average value of the predicted position and the measurement position as the display position of the target object at the first moment.

Further, in S 1804, if the tracking and fusion module obtains a plurality of measurement positions of the target object before the first moment, the tracking and fusion module may determine, in a plurality of manners, a measurement position used to be fused with the predicted position. The manners are not specifically limited to the following several manners.

A determining manner 1: The tracking and fusion module determines an average value of the plurality of measurement positions as a measurement position used to be fused with the predicted position.

A determining manner 2: The tracking and fusion module determines a last measurement position in the obtained plurality of measurement positions as a measurement position used to be fused with the predicted position.

Specific content of S1804 is similar to content of S803. For brief description, refer to the content of S803 for details.

S1805: The tracking and fusion module determines the display position of the target object at the first moment based on the predicted position.

In an optional manner, when the tracking and fusion module does not obtain the measurement position of the target object before the first moment, the predicted position that is determined by a prediction model and that is of the target object at the first moment is directly used as an output. This can greatly improve a system display output speed, and reduce a delay.

S1806: The tracking and fusion module enables the HUD engine rendering module to display prompt information of the target object at the first moment and at the display position.

If a world coordinate system in which the detection module in a driving vehicle collects information is different from a vehicle body coordinate system, before projection is performed in this embodiment of this application, the HUD coordinate transformation module may adjust the display position of the target object at the first moment.

For example, the HUD coordinate transformation module obtains the display position of the target object at the first moment through the interface circuit, and then maps the display position in the world coordinate system to the vehicle body coordinate system based on a correspondence between the world coordinate system in which the display position is located and the vehicle body coordinate system, to obtain an adjusted display position of the target object at the first moment. The HUD coordinate transformation module transmits the adjusted display position of the target object at the first moment to the HUD engine rendering module through the interface circuit.

Further, in this embodiment of this application, before the display position of the target object is projected by the HUD engine rendering module, to better reduce jitter, the HUD image stabilization module may further determine the display position. A manner is not specifically limited to the following several types.

A manner 1: The HUD image stabilization module obtains the display position of the target object at the first moment based on the predicted position, the measurement position, and a correction value.

A manner 2: The HUD image stabilization module obtains the display position of the target object at the first moment based on the predicted position, the measurement position, and an average value of display positions corresponding to a plurality of adjacent moments before the first moment.

According to the procedure shown in FIG. 18A and FIG. 18B, the display method provided in this embodiment of this application may be implemented by the electronic apparatus shown in FIG. 6. It should be understood that the step embodiments that are shown in FIG. 18A and FIG. 18B is implemented by the electronic apparatus shown in FIG. 6. According to the display method provided in this embodiment of this application, some steps shown in FIG. 18A and FIG. 18B may be omitted, or some steps in FIG. 18A and FIG. 18B may be replaced by other steps. Alternatively, the electronic apparatus may further perform some steps not shown in FIG. 18A and FIG. 18B.

Based on the foregoing content and a same concept, this application further provides an electronic apparatus, configured to implement functions of the electronic apparatus in the display method described in the foregoing method embodiments, and therefore the electronic apparatus has beneficial effects of the foregoing method embodiments. The electronic apparatus may include any structure in FIG. 4 to FIG. 6, or may be implemented by using a combination of any plurality of structures in FIG. 4 to FIG. 6.

The electronic apparatus shown in FIG. 4 may be a terminal or a vehicle, or may be a chip inside a terminal or a vehicle. The electronic apparatus may implement the display method shown in FIG. 8 or FIG. 18A and FIG. 18B and the foregoing optional embodiments. The electronic apparatus may include a processing module 410 and a collection module 420.

The processing module 410 may be configured to perform any one of steps of S800 to S805 in the method shown in FIG. 8 or S1801 to S1806 in the method shown in FIG. 18A and FIG. 18B, or may be configured to perform any step in the foregoing optional embodiments, for example, determining the measurement position of the target object, converting the coordinate system, and determining whether the measurement position of the target object is obtained before the first moment. The collection module 420 is configured to collect sensing information of a target object. For example, the processing module 410 may be configured to perform S1800 or the like in the method shown in FIG. 18A and FIG. 18B, or may be configured to perform any step of obtaining target object information in the foregoing optional embodiments. For details, refer to detailed description in the method example. Details are not described herein again.

The processing module 410 may be configured to: obtain sensing information of a target object, where the target object includes one or more of a vehicle, a person, an obstacle, and a traffic sign; obtain a predicted position of the target object at a first moment based on the sensing information of the target object; obtain a measurement position of the target object before the first moment; and enable an electronic apparatus to display prompt information of the target object at the first moment based on the predicted position and the measurement position.

It should be understood that the electronic apparatus in this embodiment of this application may be implemented by software, for example, a computer program or instructions that have the foregoing functions. The corresponding computer program or the corresponding instructions may be stored in a memory inside a terminal. A processor reads the corresponding computer program or the corresponding instructions in the memory to implement the foregoing functions of the processing module 410 and/or the collection module 420. Alternatively, the electronic apparatus in this embodiment of this application may be alternatively implemented by hardware. The processing module 410 may be a processor (for example, a CPU or a processor in a system chip), and the collection module 420 may include one or more of a camera apparatus and a sensing apparatus.

In an optional manner, the processing module 410 may be configured to:
when the measurement position of the target object is obtained before the first moment, enable the electronic apparatus to display the prompt information of the target object at the first moment and at a display position, where the display position is related to the predicted position and the measurement position.

In an optional manner, the processing module 410 may be configured to:
when the measurement position of the target object is not obtained before the first moment, enable the electronic apparatus to display the prompt information of the target object at the first moment and at a display position, where the display position is related to the predicted position.

In an optional manner, the processing module 410 may be configured to:
when a plurality of measurement positions of the target object are obtained before the first moment, enable the electronic apparatus to display the prompt information of the target object at the first moment and at the display position, where the display position is related to the predicted position and an average value of the plurality of measurement positions.

In an optional manner, the processing module 410 may be configured to:
when a plurality of measurement positions of the target object are obtained before the first moment, enable the electronic apparatus to display the prompt information of the target object at the first moment and at the display position, where the display position is related to the predicted position and a last obtained measurement position in the plurality of measurement positions.

In an optional manner, the display position is further related to a preset correction value, and the correction value is used to reduce an error generated when a vehicle wobbles in a driving process.

In an optional manner, the display position is further related to an average value of display positions corresponding to a plurality of adjacent moments before the first moment.

In an optional manner, the target object includes one or more of a vehicle, a person, an obstacle, and a traffic sign.

It should be understood that, for processing details of the electronic apparatus in this embodiment of this application, refer to FIG. 8, FIG. 18A and FIG. 18B, and related descriptions in the method embodiments of this application. Details are not described herein again.

The electronic apparatus shown in FIG. 5 may be a terminal or a vehicle, or may be a chip inside a terminal or a vehicle. The vehicle control apparatus may implement the vehicle control method shown in FIG. 8 or FIG. 18A and FIG. 18B and the foregoing optional embodiments. The electronic apparatus may include at least one of a processor, a memory, an interface circuit, or a human machine interaction apparatus. It should be understood that although FIG. 5 shows only one processor, one memory, one interface circuit, and one (or one type of) collection apparatus, the electronic apparatus may include another quantity of processors and interface circuits.

The interface circuit is configured to connect the electronic apparatus to another component of a terminal or a vehicle, for example, a memory, another processor, or a projection apparatus. The processor may be configured to perform signal interaction with another component through the interface circuit. The interface circuit may be an input/output interface of the processor.

For example, the processor may read, through the interface circuit, a computer program or instructions in a memory coupled to the processor, and decode and execute the computer program or the instructions. It should be understood that the computer program or the instructions may include the foregoing functional programs, or may include the foregoing functional programs of the electronic apparatus. When the corresponding functional programs are decoded and executed by the processor, the electronic apparatus can implement the solution in the display method provided in embodiments of this application.

Optionally, these functional programs are stored in a memory outside the electronic apparatus. In this case, the electronic apparatus may not include a memory. When the foregoing functional programs are decoded and executed by the processor, the memory temporarily stores some or all content of the foregoing functional programs.

Optionally, these functional programs are stored in a memory inside the electronic apparatus. When the memory inside the electronic apparatus stores the foregoing functional programs, the electronic apparatus may be disposed in the electronic apparatus in this embodiment of this application.

Optionally, these functional programs are stored in a memory outside a road condition television apparatus, and other parts of these functional programs are stored in a memory inside the electronic apparatus.

It should be understood that the processor may be a chip. For example, the processor may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a micro controller unit (micro controller unit, MCU), a programmable logic device (programmable logic device, PLD), or another integrated chip.

It should be noted that, the processor in embodiments of this application may be an integrated circuit chip, and has a signal processing capability. In an implementation process, the steps in the foregoing method embodiments may be completed by using an integrated logic circuit of hardware in the processor or instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. The steps of the methods disclosed with reference to embodiments of this application may be directly executed and completed by a hardware decoding processor, or may be executed and completed by using a combination of hardware and software modules in a decoding processor. A software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example but not a limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memories of the systems and methods described in the text are intended to include, but are not limited to these and any other suitable types of memories.

It should be understood that when the electronic apparatus is implemented by using the structure shown in FIG. 5, the memory may store a computer program or instructions, and the processor executes the computer program or instructions stored in the memory, to perform an action performed by the processing module 410 when the electronic apparatus is implemented by using the structure shown in FIG. 4. Alternatively, the collection apparatus 420 may perform an action of collecting sensing information of the target object by the electronic apparatus by using the structure shown in FIG. 4. Optionally, the processing module 410 shown in FIG. 4 may be implemented by using the processor and the memory shown in FIG. 5, or the processing module 410 shown in FIG. 4 includes a processor and a memory, or the processor executes a computer program or instructions stored in the memory, to implement the actions performed by the processing module 410 shown in FIG. 4 above, and/or the collection module 420 shown in FIG. 4 may be implemented by the collection apparatus shown in FIG. 5, or the processing module 410 shown in FIG. 4 includes the collection apparatus shown in FIG. 5, or the collection apparatus performs the actions performed by the collection apparatus 420 shown in FIG. 4.

When the electronic apparatus is implemented by using the structure shown in FIG. 6, one or more of the detection module, the tracking and fusion module, the HUD image stabilization module, the HUD coordinate transformation module, and the HUD engine rendering module may be used to perform the actions performed by the processing module 410 when the electronic apparatus is implemented by using the structure shown in FIG. 4. The detection module may also perform the actions performed by the collection module 420 when the electronic apparatus is implemented by using the structure shown in FIG. 4. When the electronic apparatus is implemented by using the structure shown in FIG. 6, for actions separately performed by the detection module, the tracking and fusion module, the HUD image stabilization module, the HUD coordinate transformation module, and the HUD engine rendering module, refer to descriptions in the procedure shown in FIG. 17. Details are not described herein again.

It should be understood that the structures of the electronic apparatuses shown in any one of FIG. 4 to FIG. 6 may be combined with each other, and for the electronic apparatuses shown in any one of FIG. 4 to FIG. 6 and related design details of the optional embodiments, reference may be made to each other. Alternatively, reference may be made to the display method shown in any one of FIG. 4 to FIG. 6 and related design details of each optional embodiment. Details are not described herein.

Based on the foregoing content and a same concept, this application provides a computing device, including a processor. The processor is connected to a memory. The memory is configured to store a computer program or instructions. The processor is configured to execute the computer program stored in the memory, so that the computing device performs the method in the foregoing method embodiments.

Based on the foregoing content and a same concept, this application provides a computer-readable storage medium. The computer-readable storage medium stores a computer program or instructions. When the computer program or the instructions are executed, a computing device is enabled to perform the method in the foregoing method embodiments.

Based on the foregoing content and a same concept, this application provides a computer program product. When a computer executes the computer program product, a computing device is enabled to perform the method in the foregoing method embodiments.

Based on the foregoing content and a same concept, this application provides a chip. The chip is connected to a memory, and is configured to read and execute a computer program or instructions stored in the memory, so that a computing device performs the method in the foregoing method embodiments.

Based on the foregoing content and a same concept, an embodiment of this application provides an apparatus. The apparatus includes a processor and an interface circuit. The interface circuit is configured to receive a computer program or instructions and transmit the computer program or instructions to the processor. The processor runs the computer program or instructions to perform the method in the foregoing method embodiments.

It should be understood that module division in embodiments of this application is an example, and is only logical function division. During actual implementation, there may be another division manner. In addition, functional modules in embodiments of this application may be integrated into one processor, or may exist alone physically, or two or more modules may be integrated into one module. The foregoing integrated module may be implemented in a form of hardware, or may be implemented in a form of a software functional module.

A person skilled in the art should understand that embodiments of this application may be provided as methods, systems, or computer program products. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, and computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. Thus, this application is intended to cover such modifications and variations to this application, provided that the modifications and variations fall within the scope of the claims of this application and their equivalent technologies.

**Claims**

1. A display method, comprising:

    obtaining sensing information of a target object;
    obtaining a predicted position of the target object at a first moment based on the sensing information of the target object;
    obtaining a measurement position of the target object before the first moment; and
    enabling, based on the predicted position and the measurement position, a display apparatus to display prompt information of the target object at the first moment.

2. The method according to claim 1, wherein the enabling, based on the predicted position and the measurement position, a display apparatus to display prompt information of the target object at the first moment comprises:
when the measurement position of the target object is obtained before the first moment, enabling the display apparatus to display the prompt information of the target object at the first moment and at a display position, wherein the display position is related to the predicted position and the measurement position.

3. The method according to claim 1, wherein the enabling, based on the predicted position and the measurement position, a display apparatus to display prompt information of the target object at the first moment comprises:
when the measurement position of the target object is not obtained before the first moment, enabling the display apparatus to display the prompt information of the target object at the first moment and at a display position, wherein the display position is related to the predicted position.

4. The method according to claim 1 or 2, wherein the enabling, based on the predicted position and the measurement position, a display apparatus to display prompt information of the target object at the first moment comprises:
when a plurality of measurement positions of the target object are obtained before the first moment, enabling the display apparatus to display the prompt information of the target object at the first moment and at the display position, wherein the display position is related to the predicted position and an average value of the plurality of measurement positions.

5. The method according to claim 1 or 2, wherein the enabling, based on the predicted position and the measurement position, a display apparatus to display prompt information of the target object at the first moment comprises:
when a plurality of measurement positions of the target object are obtained before the first moment, enabling the display apparatus to display the prompt information of the target object at the first moment and at the display position, wherein the display position is related to the predicted position and a last obtained measurement position in the plurality of measurement positions.

6. The method according to any one of claims 2 to 5, wherein the display position is further related to a preset correction value, and the correction value is used to reduce an error generated when a vehicle wobbles in a driving process.

7. The method according to claims 2 to 5, wherein the display position is further related to an average value of display positions corresponding to a plurality of adjacent moments before the first moment.

8. The method according to any one of claims 1 to 7, wherein the target object comprises one or more of a vehicle, a person, an obstacle, and a traffic sign.

9. An electronic apparatus, comprising a processing module and a communication module, wherein

the communication module is configured to obtain sensing information of a target object; and
the processing module is configured to: obtain a predicted position of the target object at a first moment based on the sensing information of the target object; obtain a measurement position of the target object within preset duration before the first moment; and enable, based on the predicted position and the measurement position, a display apparatus to display prompt information of the target object at the first moment.

10. The electronic apparatus according to claim 9, wherein the processing module is specifically configured to: when the measurement position of the target object is obtained before the first moment, enable the display apparatus to display the prompt information of the target object at the first moment and at a display position, wherein the display position is related to the predicted position and the measurement position.

11. The electronic apparatus according to claim 9, wherein the processing module is specifically configured to: when the measurement position of the target object is not obtained before the first moment, enable the display apparatus to display the prompt information of the target object at the first moment and at a display position, wherein the display position is related to the predicted position.

12. The electronic apparatus according to claim 9 or 10, wherein the processing module is specifically configured to: when a plurality of measurement positions of the target object are obtained before the first moment, enable the display apparatus to display the prompt information of the target object at the first moment and at the display position, wherein the display position is related to the predicted position and an average value of the plurality of measurement positions.

13. The electronic apparatus according to claim 9 or 10, wherein the processing module is specifically configured to: when a plurality of measurement positions of the target object are obtained before the first moment, enable the display apparatus to display the prompt information of the target object at the first moment and at the display position, wherein the display position is related to the predicted position and a last obtained measurement position in the plurality of measurement positions.

14. The electronic apparatus according to any one of claims 9 to 13, wherein the display position is further related to a preset correction value, and the correction value is used to reduce an error generated when a vehicle wobbles in a driving process.

15. The electronic apparatus according to any one of claims 9 to 13, wherein the display position is further related to an average value of display positions corresponding to a plurality of adjacent moments before the first moment.

16. The electronic apparatus according to any one of claims 9 to 15, wherein the target object comprises one or more of a vehicle, a person, an obstacle, and a traffic sign.

17. A computing device, comprising a processor, wherein the processor is connected to a memory, the memory stores a computer program or instructions, and the processor is configured to execute the computer program or the instructions stored in the memory, so that the computing device performs the method according to any one of claims 1 to 8.

18. A computer-readable storage medium, wherein the computer-readable storage medium stores a computer program or instructions, and when the computer program or the instructions are executed by a computing device, the computing device is enabled to perform the method according to any one of claims 1 to 8.

19. A chip, comprising at least one processor and an interface, wherein

the interface is configured to provide a computer program, instructions or data for the at least one processor; and
the at least one processor is configured to execute the computer program or the instructions, so that the method according to any one of claims 1 to 8 is performed.

Road

Windshield of a driving vehicle

Projection apparatus

FIG. 1

Windshield

Prompt information of a target object

Jitter

FIG. 2

Windshield

Fixed
component

AR-HUD

Dashcam used as
a display
apparatus

z

x

y

FIG. 3

| Processing module 410 | Collection module 420 |

FIG. 4

Display apparatus

Processor

Memory

Interface
circuit

Collection
apparatus

FIG. 5

| Detection module | Tracking and fusion module | HUD image stabilization module | HUD coordinate transformation module | HUD engine rendering module |

FIG. 6

700

Obtain sensing information of a target object

701

Obtain a predicted position of the target object at a first moment based on the sensing information of the target object

703

Obtain a measurement position of the target object before the first moment

704

Enable, based on the predicted position and the measurement position, a display apparatus to display prompt information of the target object at the first moment

FIG. 7

800

A display apparatus obtains sensing information of a target object

801

The display apparatus obtains a predicted position of the target object at a first moment based on the sensing information of the target object

802

The display apparatus determines whether a measurement position is obtained before the first moment

803

The display apparatus determines a display position of the target object at the first moment based on the predicted position and the measurement position

804

The display apparatus determines a display position of the target object at the first moment based on the predicted position

805

The display apparatus is enabled to display prompt information of the target object at the first moment and the display position

FIG. 8

Windshield

Fixed component

Camera lens

AR-HUD

Transmit collected sensing information of a target object to the processor

z

x

y

Processor

FIG. 9

Obtain a measurement position of a target object before the first moment

First moment

Obtain a predicted position of the target object at the first moment

FIG. 10

FIG. 11

FIG. 12

A measurement position used to perform fusion is an average value of the measurement positions 1 to 3

Preset duration before a first moment

A plurality of measurement positions of a target object are obtained

Measurement position 1    Measurement position 2    Measurement position 3

FIG. 13

A measurement position used to perform fusion is the measurement position 3

Preset duration before a first moment

A plurality of measurement positions of a target object are obtained

Measurement position 1    Measurement position 2    Measurement position 3

FIG. 14

Preset duration before a first moment

A display position at the first moment is related to a predicted position

No measurement position of a target object is obtained

First moment

FIG. 15

(a)

(b)

FIG. 16

| BOX 1 | BOX 2 | BOX 3 | BOX 4 | BOX 5 | BOX 6 | BOX 7 | BOX 8 | BOX 9 |
|-------|-------|-------|-------|-------|-------|-------|-------|-------|

FIG. 17

Road condition display apparatus

| Detection module | Tracking and fusion module | HUD image stabilization module | HUD coordinate transformation module | HUD engine rendering module |

S1800: The detection module detects sensing information of a target object

The sensing information is transmitted

S1801: The tracking and fusion module obtains the sensing information of the target object

S1802: The tracking and fusion module obtains a predicted position of the target object at a first moment based on the sensing information of the target object

TO FIG. 18B

TO FIG. 18B

TO FIG. 18B

FIG. 18A

CONT.
FROM
FIG. 18A

CONT.
FROM
FIG. 18A

CONT.
FROM
FIG. 18A

S1803:
The tracking and
fusion module determines
whether a measurement
position is obtained
before the first
moment

Yes

No

S1804: The tracking and
fusion module determines a
display position of the target
object at the first moment
based on the predicted position
and the measurement position

S1805: The tracking and
fusion module determines a
display position of the target
object at the first moment
based on the predicted position

The HUD engine rendering module is enabled to
display prompt information of the target object at
the first moment and the display position

S1806: The HUD engine rendering
module displays the prompt
information of the target object at the
first moment and the display position

FIG. 18B

## INTERNATIONAL SEARCH REPORT

| | International application No. |
|---|---|
| | **PCT/CN2021/109949** |

**A. CLASSIFICATION OF SUBJECT MATTER**

G06F 3/147(2006.01)i; G01C 21/34(2006.01)i; G09G 5/38(2006.01)i; G08G 1/04(2006.01)i

According to International Patent Classification (IPC) or to both national classification and IPC

**B. FIELDS SEARCHED**

Minimum documentation searched (classification system followed by classification symbols)

G06F; G01C; G09G; G08G; G06R

Documentation searched other than minimum documentation to the extent that such documents are included in the fields searched

Electronic data base consulted during the international search (name of data base and, where practicable, search terms used)

CNABS, CNTXT, CNKI: 平视, HUD, 显示, 风挡, 挡风, 风档, 档风, AR, 增强现实, 投射, 投影, 提示, 指引, 指导, 规划, 引导, 轨迹, 防抖, 抖动, 晃动, 颠簸, 阻塞, 延迟, 时延, 拥塞, 偏移, 偏差, 偏离, 补偿, 校正, 修正, 调整, 预计, 推算, 估计, 预测, 预估, 推测, 推断, 推定, 计算, 预期, 位置, 测量, 真实, 监测, 真正, 实际, 时刻, 车, 交通工具, 融合, 渲染; VEN, USTXT, WOTXT, EPTXT: head up, head-up, display, windscreen, augmented reality, project, indication, direct, guidance, dithering, shake, bump, jolty, delay, jam, offset, compensate, emendation, adjust, calculate, estimate, forecast, expect, anticipation, contemplation, measure, actual, real, time, vehicle, amalgamation, romance

**C. DOCUMENTS CONSIDERED TO BE RELEVANT**

| Category* | Citation of document, with indication, where appropriate, of the relevant passages | Relevant to claim No. |
|---|---|---|
| X | CN 113112413 A (BEIJING HORIZON ROBOTICS TECHNOLOGY RESEARCH AND DEVELOPMENT CO., LTD.) 13 July 2021 (2021-07-13) description, paragraphs 24-131, and figures 1-11 | 1-19 |
| X | CN 109427199 A (BEIJING SAMSUNG TELECOM R&D CENTER et al.) 05 March 2019 (2019-03-05) description, paragraphs 94-141, and figures 1-22 | 1-19 |
| X | CN 108027652 A (SONY CORP.) 11 May 2018 (2018-05-11) description, paragraphs 219-247, and figures 1-27 | 1-19 |
| X | CN 111915900 A (DENSO CORP.) 10 November 2020 (2020-11-10) description, paragraphs 23-73, and figures 1-12 | 1-19 |
| A | WO 2020158601 A1 (NIPPON SEIKI CO., LTD.) 06 August 2020 (2020-08-06) entire document | 1-19 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 April 2022** | **05 May 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2021/109949** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 112904996 A (SHANGHAI JIAO TONG UNIVERSITY) 04 June 2021 (2021-06-04) entire document | 1-19 |

Form PCT/ISA/210 (second sheet) (January 2015)

INTERNATIONAL SEARCH REPORT
Information on patent family members

International application No.

**PCT/CN2021/109949**

| Patent document cited in search report | | | Publication date (day/month/year) | Patent family member(s) | | | Publication date (day/month/year) |
|---|---|---|---|---|---|---|---|
| CN | 113112413 | A | 13 July 2021 | None | | | |
| CN | 109427199 | A | 05 March 2019 | None | | | |
| CN | 108027652 | A | 11 May 2018 | EP | 3352050 | A1 | 25 July 2018 |
| | | | | WO | 2017047178 | A1 | 23 March 2017 |
| | | | | US | 2018240220 | A1 | 23 August 2018 |
| | | | | JP | WO2017047178 | A1 | 05 July 2018 |
| | | | | CN | 108027652 | B | 22 June 2021 |
| | | | | US | 10977774 | B2 | 13 April 2021 |
| | | | | JP | 6844542 | B2 | 17 March 2021 |
| CN | 111915900 | A | 10 November 2020 | JP | 2020184164 | A | 12 November 2020 |
| | | | | US | 2020357272 | A1 | 12 November 2020 |
| WO | 2020158601 | A1 | 06 August 2020 | None | | | |
| CN | 112904996 | A | 04 June 2021 | None | | | |

Form PCT/ISA/210 (patent family annex) (January 2015)